# EUROPÄISCHE PATENTSCHRIFT

(11) **EP 0 637 620 B1**
(45) Veröffentlichungstag und Bekanntmachung des Hinweises auf die Patenterteilung: **09.12.1998**
(21) Anmeldenummer: 94111943.0
(22) Anmeldetag: 30.07.1994
(51) Int. Cl.: C09K 3/18, C07C 29/76

(54) **Verfahren zur Wiederaufbereitung von gebrauchten glykolischen Flugzeugenteisungsmitteln**
Process for regenerating used deicing agent for planes based on glycol
Procédé de retraitement des agents usagés de dégivrage des avions à base de glycol

(30) Priorität: 05.08.1993 DE 4326345
(43) Veröffentlichungstag der Anmeldung: 08.02.1995
(73) Patentinhaber: Clariant GmbH, 65929 Frankfurt am Main (DE)
(72) Erfinder: Pöllmann, Klaus, Dr., D-84489 Burghausen (DE); Von Eysmondt, Jörg, Dr., D-65719 Hofheim (DE)

(56) Entgegenhaltungen:
- WO-A-91/09828
- FR-A- 2 246 527
- PATENT ABSTRACTS OF JAPAN vol. 95 no. 0004 & JP-A-71 008141 (HITACHI) 25.April 1995,

## Beschreibung

Die Erfindung betrifft ein Verfahren zur Wiederaufbereitung von gebrauchten Flugzeugenteisungsmitteln auf der Basis von Glykolen.

Derartige Enteisungsmittel sind zum Beispiel in den US-Patentschriften 4,358,389 und 4,744,913 beschrieben. Sie bestehen im wesentlichen aus (a) etwa 40 bis 80 Gew.-% von mindestens einer Glykolverbindung, zum Beispiel Ethylenglykol, Diethylenglykol, Propylenglykol und dergleichen, (b) 0,05 bis 1,5 Gew.-% von mindestens einer polymeren Komponente als Verdickungsmittel, zum Beispiel aus der Gruppe der Polyacrylate, Polymethacrylate, Xanthangummi und Cellulosederivate, (c) 0,05 bis 1 Gew.-% von mindestens einem Tensid, zum Beispiel Olefinsulfonate, Alkylarylsulfonate, Polyoxalkylate und dergleichen, (d) mindestens einem Korrosionsinhibitor in einer wirksamen Menge, zum Beispiel aus der Gruppe der Triazole, Imidazole und/oder Phosphorsäureester, und (e) mindestens einer basischen Verbindung zur Einstellung des pH-Wertes von etwa 7,5 bis 11 und (f) Wasser als Rest auf 100 Gew.-%.

Diese Flugzeugenteisungsmittel werden als solche (das heißt als Konzentrat) oder nach Verdünnung mit Wasser auf die zu behandelnden Flugzeugteile aufgebracht zur deren Konservierung und/oder zur Befreiung von Eis und/oder Schnee. Von den behandelten Flugzeugteilen fließt das Enteisungsmittel, das nun mit Schmelzwasser mehr oder weniger verdünnt und mit Sand, Gummiabrieb, Öl, Verbrennungsrückständen und dergleichen verunreinigt ist, in ein Sammelbecken und wird als Abwasser aus der Flugzeugenteisung oder als gebrauchtes Flugzeugenteisungsmittel bezeichnet.

Derzeit werden die gebrauchten Flugzeugenteisungsmittel mit Hilfe einer biologischen Kläranlage entsorgt. Dies führt aber - trotz der guten biologischen Abbaubarkeit von Glykolen - zu einer unerwünschten Belastung der Kläranlage, besonders bei niedrigen Außentemperaturen und damit verbundener reduzierter Bakterienaktivität, was beim Einsatz von Enteisungsmitteln im allgemeinen der Fall ist. Ein weiterer Nachteil dieser Art der Entsorgung von Flugzeugenteisungsmitteln ist der Verlust des in großer Menge vorliegenden und wertvollen Glykols.

Die Aufgabe der Erfindung besteht demnach darin, ein einfaches und kostengünstiges Verfahren vorzuschlagen, das ein weitgehendes Wiedergewinnen und Wiedereinsetzen insbesondere der Glykolverbindungen von gebrauchten Flugzeugenteisungsmitteln ermöglicht.

Das erfindungsgemäße Verfahren zur Wiederaufbereitung von gebrauchten Flugzeugenteisungsmitteln auf der Basis von Glykolen ist dadurch gekennzeichnet, daß man
(1) das gebrauchte Flugzeugenteisungsmittel zunächst filtriert zur Abtrennung von den suspendierten Verunreinigungen,
(2) das im Schritt (1) erhaltene Filtrat einer Ultrafiltration unterwirft zur Abtrennung von den polymeren Verdickungsmitteln,
(3) das im Schritt (2) erhaltene Permeat der Ultrafiltration mit einem Anionenaustauscher und einem Kationenaustauscher behandelt zur Abtrennung von anwesenden Salzen und ionischen Verbindungen und
(4) die im Schritt (3) erhaltene Lösung destilliert zur Entfernung von überschüssigem Wasser und damit Einstellung des Glykolgehaltes auf den gewünschten Wert.

Erfindungsgemäß werden also in einem ersten Schritt die ungelöst vorliegenden Bestandteile abfiltriert, das sind zum Beispiel Feststoffe wie Sand und Gummiabrieb, ferner Schwebstoffe, Ölpartikel und dergleichen. Zu dieser Grobfiltration, die vorzugsweise bei Raumtemperatur und Atmosphärendruck durchgeführt wird, können die üblichen Filtermaterialien eingesetzt werden, zum Beispiel Papier, Tuch, Gewebe und dergleichen.

Das durch die Grobfiltration erhaltene Filtrat wird dann einer Ultrafiltration unterworfen, das heißt durch eine Membran geschickt, so daß vor allem das polymere Verdickungsmittel abgetrennt wird. Daneben werden auch zum Beispiel anwesendes emulgiertes Öl, höhere Kohlenwasserstoffe, Tenside und dergleichen in einem mehr oder weniger hohen Ausmaß abgetrennt. Der Ultrafiltrationsschritt wird bevorzugt in der Weise durchgeführt, daß (2.1) eine Ultrafiltrationsmembran mit einer nominellen Trenngrenze (cut off) von 1000 bis 500 000 eingesetzt wird, vorzugsweise mit einem cut off von 100 000 bis 300 000, (2.2) die Ultrafiltrationsmembran aus einem organischen Polymeren oder einem anorganischen Material besteht, wobei Membrane aus Polysulfonen, Polyethersulfonen oder Polyaramiden bevorzugt sind, (2.3) als Membranmodule Rohrmodule, Kapillarmodule, Plattenmodule und vorzugsweise Spiralwickelmodule eingesetzt werden, (2.4) bei einem transmembranen Druck von 2 bis 10 bar, vorzugsweise 3 bis 6 bar, gearbeitet wird und (2.5) bei einer Temperatur von 20 bis 80 °C gearbeitet wird, vorzugsweise 40 bis 60 °C, um die zunehmende Viskosität des Konzentrats beim Anreichern des Verdickerpolymers während der Ultrafiltration herabzusetzen.

Das Produkt (Permeat oder Lösung) der Ultrafiltration wird erfindungsgemäß einem Ionenaustauschverfahren unterworfen, in dem es mit einer Kombination aus Anionenaustauscher und Kationenaustauscher behandelt wird. Eine bevorzugte Art der Behandlung oder des Inkontaktbringes des Permeats mit den Ionenaustauschern ist jene, bei der diese in Form eines Bettes (auch Kolonne oder Säule genannt) vorliegen und die Flüssigkeit durch das Austauschbett hindurchgeschickt und am Ende des Bettes das gereinigte Permeat aufgefangen wird. Im Falle einer Kombination von Anionenaustauscher und Kationenaustauscher wird klarerweise der Auslauf (Eluat) aus dem ersten noch durch den zweiten Ionenaustauscher geschickt und am Ende dieses Bettes die gereinigte Flüssigkeit (Eluat) aufgefangen. Es hat sich als vorteilhaft erwiesen, das Permeat zuerst mit einem vorzugsweise stark sauren Kationenaustauscher und anschließend mit einem vorzugsweise stark basischen Anionenaustauscher in Kontakt zu bringen. Die Behandlung des Permeats mit den Ionenaustauschern wird im allgemeinen bei Raumtemperatur durchgeführt. Es können auch höhere Temperaturen vorteilhaft sein. So liegt die Behandlungstemperatur im allgemeinen bei 15 bis 70 °C, vorzugsweise bei 20 bis 50 °C. Diese Behandlung wird man ferner je nach gewünschter Durchflußgeschwindigkeit durch das Ionenaustauscherbett bei Atmosphärendruck, mit einem Überdruck oder mit einem mehr oder weniger großen Unterdruck durchführen. Was die Menge an Ionenaustauscher pro Liter zu behandelnder Flüssigkeit, die Durchflußgeschwindigkeit durch das Austauscherbett und dergleichen betrifft, können diese Daten der Spezifikation des verwendeten Ionenaustauschers entnommen oder in einfachen Vorversuchen festgestellt werden. Im Spezifikationsblatt des verwendeten Ionenaustauschers sind ferner neben Kapazität, Schichthöhe, Beladungsgeschwindigkeit und dergleichen auch zum Beispiel die Struktur des Ionenaustauschers (gelförmig oder porös), das Schüttgewicht, die Korngröße, der pH-Wert (starksauer, schwachsauer, starkbasisch, schwachbasisch) und dergleichen angegeben. Beim erfindungsgemäßen Verfahren können Ionenaustauscherharze mit gelförmiger oder mehr oder weniger poröser Struktur verwendet werden, wobei solche mit gelförmiger oder makroporöser Struktur bevorzugt sind. Der Aufbau des Ionenaustauschers bezüglich Grundgerüst und Ankergruppe ist für das erfindungsgemäße Verfahren nicht kritisch. Es ist lediglich erforderlich, daß die Ankergruppe den angegebenen sauren oder basischen Charakter liefert. Im Handel sind zahlreiche Anionen- und Kationenaustauscher mit Spezifikationsblatt erhältlich, die hier geeignet sind. Beispiele für Grundgerüste sind Polystyrol, Polyacrylat, Copolymere aus Styrol und Acrylat, Styrol und Divinylbenzol und dergleichen. Beispiele für starksaure und schwachsaure Ankergruppen sind Sulfonsäure und Phosphonsäure (das sind starksaure Gruppen) sowie Carbonsäure (schwachsauer). Beispiele für starkbasische und schwachbasische Ankergruppen sind primäres, sekundäres und tertiäres Amin (das sind schwachbasische Gruppen) und quaternäres Amin (starkbasisch).

Die nach der Ionenaustauscherbehandlung erhaltene klare und farblose (wasserhelle) bis leicht gelb gefärbte Flüssigkeit besteht im wesentlichen aus den angegebenen Glykolen und Wasser. Diese an Wasser reichere Glykol/Wasser-Lösung wird einer Destillation unterworfen, um ihren Wassergehalt zu reduzieren, das heißt um so viel Wasser abzudestillieren, daß man eine solche Glykol/Wasser-Lösung erhält, wie sie zur Herstellung eines neuen Flugzeugenteisungsmittels eingesetzt wird, vorzugsweise 40 bis 80 Gew.-% Glycol, bezogen auf die Lösung. Die Destillation, bei der also nur das Wasser und nicht auch Glykol ausgetragen werden soll, wird man bei Atmosphärendruck oder gegebenenfalls leichtem Unterdruck durchführen. Als Sumpftemperatur wird man vorzugsweise etwa 100 bis 120 °C anwenden. Die erhaltene Sumpfflüssigkeit stellt eine Glykol/Wasser-Lösung dar, mit der ein neues Flugzeugenteisungsmittel bereitet werden kann, indem man die weiteren notwendigen Komponenten in die Glykol/Wasser-Lösung einmischt.

Das erfindungsgemäße Verfahren ist besonders geeignet für gebrauchte Flugzeugenteisungsmittel bestehend im wesentlichen aus (a) 1 bis 60 Gew.-%, vorzugsweise 5 bis 50 Gew.-%, von den genannten Glykolen, (b) bis zu 0,8 Gew.-%, vorzugsweise 0,05 bis 0,5 Gew.-%, von den genannten wasserlöslichen Polymeren aus der Gruppe der Polyacrylate und Polymethacrylate, (c) etwa 0,01 bis 1 Gew.-% von den genannten Tensiden, vorzugsweise aus der Gruppe der anionischen Tenside, zum Beispiel Sulfonate wie Olefinsulfonate und Alkylbenzolsulfonate, (d) etwa 0,001 bis 0,1 Gew.-% Korrosionsinhibitor, vorzugsweise aus der Gruppe der Triazole, und (e) basischen Verbindungen aus der Gruppe der Alkalimetallhydroxide und Aminverbindungen zur Einstellung eines alkalischen pH-Wertes und Wasser als Rest auf 100 Gew.-%.

Mit der erfindungsgemäßen mehrstufigen Aufarbeitung von polymerverdickten glykolischen Flugzeugenteisungsmitteln wird eine mehr als 90gew.%ige Rückgewinnung des Glykolanteils im gesammelten gebrauchten Enteisungsmittelgemisch erreicht, und aus der erhaltenen Glykol/Wasser-Lösung kann nach Zusatz der im Reinigungsverfahren entfernten Komponenten das ursprüngliche Flugzeugenteisungsmittel einsatzbereit wieder hergestellt werden.

Die Erfindung wird nun an einem Beispiel und an zwei Vergleichsbeispielen noch näher erläutert.

### Beispiel

Es wird eine gebrauchte Flugzeugenteisungsflüssigkeit bestehend aus den folgenden wesentlichen Komponenten eingesetzt:

| | |
|---|---|
| 12,00 Gew.-% | Diethylenglykol |
| 4,00 Gew.-% | Propylenglykol |
| 0,04 Gew.-% | Polyacrylsäurealkalisalz als Verdickungsmittel |
| 0,05 Gew.-% | Natriumalkylbenzolsulfonat als anionisches Tensid |
| 0,01 Gew.-% | Benzotriazol als Korrosionsinhibitor |
| 83,90 Gew.-% | Wasser als Rest auf 100 Gew.-% (Gewichtsprozente bezogen auf die Flüssigkeit). |

Dieses gebrauchte Flugzeugenteisungsmittel, das einen pH-Wert von 8,5 hatte, wurde zunächst über ein Filterpapier mit einem Porendurchmesser von etwa 50 µm filtriert. Das Filtrat wurde einer Ultrafiltration mit den folgenden Bedingungen unterworfen:
- Membran:: Polyaramidmembran mit einer Fläche von 6 m² und einem cut-off-Wert von 20 000
- Modul:: Spiralwickelmodul
- Temperatur:: 30 °C
- Druck:: 3 bar.

### Ergebnis der Ultrafiltration:

- Permeatmenge:: 93,5 Gew.-%, bezogen auf die eingesetzte Flüssigkeitsmenge.

Das Permeat enthielt:

| | |
|---|---|
| 12,00 Gew.-% | Diethylenglykol |
| 4,00 Gew.-% | Propylenglykol |

weniger als 0,01 Gew.-% Polyacrylsäurealkalisalz

| | |
|---|---|
| 0,03 Gew.-% | Natriumalkylbenzolsulfonat |
| 0,01 Gew.-% | Benzotriazol |

Wasser als Rest auf 100 Gew.-% (Gewichtsprozente bezogen auf die Permeatmenge).
- Konzentratmenge (wird verworfen):: 6,5 Gew.-%, bezogen auf die eingesetzte Flüssigkeitsmenge.

Das Konzentrat enthielt:

| | |
|---|---|
| 12,00 Gew.-% | Diethylenglykol |
| 4,00 Gew.-% | Propylenglykol |
| 0,51 Gew.-% | Polyacrylsäurealkalisalz |
| 0,28 Gew.-% | Natriumalkylbenzolsulfonat |
| 0,01 Gew.-% | Benzotriazol |

Wasser als Rest auf 100 Gew.-% (Gewichtsprozente bezogen auf die Konzentratmenge).

Das durch die Ultrafiltration erhaltene Permeat wurde zuerst über einen starksauren Kationenaustauscher (Polystyrol mit Sulfonsäuregruppen) und anschließend über einen starkbasischen Anionenaustauscher (Polystyrol mit quaternären Ammoniumgruppen) geleitet.
Das Eluat enthielt:
12.00 Gew.-% Diethylenglykol
4,00 Gew.-% Propylenglykol
weniger als 0,01 Gew.-% Polyacrylsäurealkalisalz
weniger als 0,005 Gew.-% Natriumalkylbenzolsulfonat
weniger als 0,005 Gew.-% Benzotriazol
Wasser als Rest auf 100 Gew.-% (Gewichtsprozente bezogen auf das Eluat).

In einem letzten Schritt wurde im Eluat durch Abdestillieren von Wasser ein Glykolgehalt von 55 Gew.-% eingestellt. Die Rückgewinnungsrate an Glykol war 91 Gew.-%, bezogen auf die Glykolmenge in der gebrauchten Flugzeugenteisungsflüssigkeit.

Die so erhaltene Glykol/Wasser-Lösung ist zum Beispiel nach Zusatz von Tensid als verdünntes Typ-I-Enteisungsmittel und nach dem weiteren Zusatz von Verdickungsmittel als Typ-II-Enteisungsmittel wiederverwendbar. Die Bezeichnungen Typ I und Typ II ergeben sich wie folgt: Die Association of European Airlines (AEA) Recommendations for Deicing/Antiicing of Aircraft on Ground (Edition March 1993) unterscheidet zwei Typen von Flugzeugenteisungsmitteln. Typ-I-Enteisungsmittel enthalten neben Glykol als Hauptmenge, Wasser, Tenside und Korrosionsinhibitoren und werden im allgemeinen in einer Verdünnung mit Wasser im Verhältnis von 50 : 50 eingesetzt. Typ-II-Enteisungsmittel enthalten neben Glykol und Wasser Tenside, Korrosionsinhibitoren und wasserlösliche Polymere als Verdickungsmittel, die diesem Typ Enteisungsmittel hochviskose pseudoplastische Konsistenz verleihen. Bei der Flugzeugenteisung fallen demnach als gebrauchte Flüssigkeiten solche in Form von Typ-I- oder Typ-II-Enteisungsmittel oder in Form einer Mischung aus beiden an. Mit dem erfindungsgemäßen Verfahren können alle drei Varianten von gebrauchten Flugzeugenteisungsmitteln wiederaufbereitet werden.

### Vergleichsbeispiel 1

Die gebrauchte Flugzeugenteisungsflüssigkeit von Beispiel 1 wurde nach Filtration durch das genannte Filterpapier, aber ohne vorherige Ultrafiltration, über die beiden genannten Ionenaustauscher geleitet. Das in Lösung befindliche Polymermolekül verstopfte und verklebte die Ionenaustauschersäulen sofort, so daß keine weitere Aufarbeitung möglich war.

### Vergleichsbeispiel 2

Es wurde versucht, die gebrauchte Flugzeugenteisungsflüssigkeit von Beispiel 1 nach Filtration durch das genannte Filterpapier, aber ohne vorherige Ultrafiltration und Ionenaustauscherbehandlung, einfach durch Destillation auf den gewünschten Glykolgehalt von 50 bis 80 Gew.-% einzustellen. Eine vollständige Destillation war wegen des anwesenden Tensids, das starkes Schäumen verursachte, und wegen der Anreicherung des Verdickers, was zur Zunahme der Viskosität führte, nicht möglich.

## Patentansprüche

1. Verfahren zur Wiederaufbereitung von gebrauchten Flugzeugenteisungsmitteln auf der Basis von Glykolen, dadurch gekennzeichnet, daß man
(1) das gebrauchte Flugzeugenteisungsmittel zunächst filtriert zur Abtrennung von den suspendierten Verunreinigungen,
(2) das im Schritt (1) erhaltene Filtrat einer Ultrafiltration unterwirft zur Abtrennung von den polymeren Verdickungsmitteln,
(3) das im Schritt (2) erhaltene Permeat der Ultrafiltration mit einem Anionenaustauscher und einem Kationenaustauscher behandelt zur Abtrennung von anwesenden Salzen und ionischen Verbindungen und
(4) die im Schritt (3) erhaltene Lösung destilliert zur Entfernung von überschüssigem Wasser und damit Einstellung des Glykolgehaltes auf den gewünschten Wert.

2. Verfahren nach Anspruch 1, dadurch gekennzeichnet, daß man die Ultrafiltration in der Weise durchführt, daß
(2.1) eine Ultrafiltrationsmembran mit einer nominellen Trenngrenze von 1000 bis 500 000 eingesetzt wird,
(2.2) die Ultrafiltrationsmembran aus einem organischen Polymeren oder einem anorganischen Material besteht,
(2.3) als Membranmodule Rohrmodule, Kapillarmodule, Plattenmodule oder Spiralwickelmodule eingesetzt werden,
(2.4) bei einem transmembranen Druck von 2 bis 10 bar gearbeitet wird und (2.5) bei einer Temperatur von 20 bis 80 °C gearbeitet wird.

3. Verfahren nach Anspruch 1, dadurch gekennzeichnet, daß man die Ultrafiltration in der Weise durchführt, daß
(2.1) eine Ultrafiltrationsmembran mit einer nominellen Trenngrenze von 100 000 bis 300 000 eingesetzt wird,
(2.2) die Ultrafiltrationsmembran aus einem organischen Polymeren oder einem anorganischen Material besteht,
(2.3) als Membranmodule Rohrmodule, Kapillarmodule, Plattenmodule oder Spiralwickelmodule eingesetzt werden,
(2.4) bei einem transmembranen Druck von 3 bis 6 bar gearbeitet wird und (2.5) bei einer Temperatur von 40 bis 60 °C gearbeitet wird.

4. Verfahren nach Anspruch 2 oder 3, dadurch gekennzeichnet, daß die Ultrafiltrationsmembran aus einem organischen Polymeren aus der Gruppe Polysulfone, Polyethersulfone und Polyaramide besteht.

5. Verfahren nach Anspruch 2, 3 oder 4, dadurch gekennzeichnet, daß als Membranmodule Spiralwickelmodule eingesetzt werden.

6. Verfahren nach einem oder mehreren der Ansprüche 1 bis 5, dadurch gekennzeichnet, daß das Permeat der Ultrafiltration zuerst mit einem Kationenaustauscher und der Auslauf davon mit einem Anionenaustauscher in Kontakt gebracht wird.

7. Verfahren nach einem oder mehreren der Ansprüche 1 bis 5, dadurch gekennzeichnet, daß das Permeat der Ultrafiltration zuerst mit einem starksauren Kationenaustauscher und der Auslauf davon mit einem starkbasischen Anionenaustauscher in Kontakt gebracht wird.

8. Verfahren nach einem oder mehreren der Ansprüche 1 bis 7, dadurch gekennzeichnet, daß man die nach der Ionenaustauscherbehandlung erhaltene Lösung bestehend im wesentlichen aus Glykol und Wasser zur Abtrennung von Wasser destilliert und dabei einen Glykolgehalt in der Lösung von 40 bis 80 Gew.-% einstellt, Gewichtsprozente bezogen auf die Lösung.

## Claims

1. A process for the reclamation of used aircraft deicing compositions based on glycols, which comprises
(1) initially filtering the used aircraft deicing composition to remove the suspended contaminants,
(2) subjecting the filtrate obtained in step (1) to an ultrafiltration to remove the polymer thickeners,
(3) treating the ultrafiltration permeate obtained in step (2) with an anion exchanger and a cation exchanger to remove salts and ionic compounds which are present and
(4) distilling the solution obtained in step (3) to remove excess water and thus adjust the glycol content to the required value.

2. The process as claimed in claim 1, wherein the ultrafiltration is carried out in such a way that (2.1) an ultrafiltration membrane with a nominal separation limit of 1000 to 500,000 is employed, (2.2) the ultrafiltration membrane is composed of an organic polymer or an inorganic material, (2.3) tubular modules, capillary modules, plate modules or spiral coil modules are employed as membrane modules, (2.4) a pressure across the membrane of 2 to 10 bar is used, and (2.5) the process is carried out at a temperature of 20 to 80°C.

3. The process as claimed in claim 1, wherein the ultrafiltration is carried out in such a way that (2.1) an ultrafiltration membrane with a nominal separation limit of 100,000 to 300,000 is employed, (2.2) the ultrafiltration membrane is composed of an organic polymer or an inorganic material, (2.3) tubular modules, capillary modules, plate modules or spiral coil modules are employed as membrane modules, (2.4) a pressure across the membrane of 3 to 6 bar is used, and (2.5) the process is carried out at a temperature of 40 to 60°C.

4. The process as claimed in claim 2 or 3, wherein the ultrafiltration membrane is composed of an organic polymer from the group of polysulfones, polyethersulfones and polyaramides.

5. The process as claimed in claim 2, 3 or 4, wherein spiral coil modules are employed as membrane modules.

6. The process as claimed in one or more of claims 1 to 5, wherein the ultrafiltration permeate is contacted first with a cation exchanger and the outflow therefrom is contacted with an anion exchanger.

7. The process as claimed in one or more of claims 1 to 5, wherein the ultrafiltration permeate is contacted first with a strongly acidic cation exchanger and the outflow therefrom is contacted with a strongly basic anion exchanger.

8. The process as claimed in one or more of claims 1 to 7, wherein the solution obtained after the ion exchanger treatment, essentially composed of glycol and water, is distilled to remove water and, during this, the glycol content in the solution is adjusted to 40 to 80% by weight, percentages by weight based on the solution.

## Revendications

1. Procédé de retraitement d'agents usagés de dégivrage des avions à base de glycols,
caractérisé en ce que l'on
(1) filtre d'abord l'agent usagé de dégivrage des avions pour séparer les impuretés en suspension,
(2) soumet le filtrat obtenu à l'étape (1) à une ultrafiltration pour séparer les agents épaississants polymères,
(3) traite le perméat de l'ultrafiltration obtenu à l'étape (2) avec un échangeur d'anions et un échangeur de cations pour séparer les sels et les composés ioniques présents et
(4) distille la solution obtenue à l'étape (3) pour séparer l'eau en excès et ainsi ajuster la teneur en glycol à la valeur souhaitée.

2. Procédé selon la revendication 1, caractérisé en ce que l'on effectue l'ultrafiltration de manière à utiliser (2.1) une membrane d'ultrafiltration avec un seuil de coupure nominal de 1000 à 500 000, (2.2) à ce que la membrane d'ultrafiltration soit constituée d'un polymère organique ou d'un matériau inorganique, (2.3) à utiliser comme modules de membrane des modules en forme de tuyaux, des modules capillaires, des modules en forme de plaques ou des modules enroulés en spirale, (2.4) à travailler à une pression transmembranaire de 2 à 10 bar, et (2.5) à travailler à une température de 20 à 80°C.

3. Procédé selon la revendication 1, caractérisé en ce que l'on effectue l'ultrafiltration de manière à utiliser (2.1) une membrane d'ultrafiltration avec un seuil de coupure nominal de 100 000 à 300 000, (2.2) à ce que la membrane d'ultrafiltration soit constituée d'un polymère organique ou d'un matériau inorganique, (2.3) à utiliser comme modules de membrane des modules en forme de tuyaux, des modules capillaires, des modules en forme de plaques ou des modules enroulés en spirale, (2.4) à travailler à une pression transmembranaire de 3 à 6 bar, et (2.5) à travailler à une température de 40 à 60°C.

4. Procédé selon la revendication 2 ou 3, caractérisé en ce que la membrane d'ultrafiltration est constituée d'un polymère organique choisi parmi les polysulfones, les polyéthersulfones et les polyaramides.

5. Procédé selon la revendication 2, 3 ou 4, caractérisé en ce que l'on utilise comme modules de membrane des modules enroulés en spirale.

6. Procédé selon une ou plusieurs des revendications 1 à 5, caractérisé en ce que, l'on met le perméat de l'ultrafiltration d'abord en contact avec un échangeur de cations et l'éluat de celui-ci avec un échangeur d'anions.

7. Procédé selon une ou plusieurs des revendications 1 à 5, caractérisé en ce que, l'on met le perméat de l'ultrafiltration d'abord en contact avec un échangeur de cations fortement acide et l'éluat de celui-ci avec un échangeur d'anions fortement basique.

8. Procédé selon une ou plusieurs des revendications 1 à 7, caractérisé en ce que l'on distille la solution obtenue après le traitement par échange d'ions, constituée essentiellement de glycol et d'eau pour séparer l'eau et en ce qu'on ajuste ainsi une teneur en glycol dans la solution de 40 à 80% en poids, en pourcentage en poids par rapport à la solution.
